Europäisches Patentamt

European Patent Office

Office européen des brevets

(19)

(11) Veröffentlichungsnummer: **0 235 635**
**B1**

(12) **EUROPÄISCHE PATENTSCHRIFT** ˙

(45) Veröffentlichungstag der Patentschrift: **22.08.90**

(21) Anmeldenummer: **87101970.9**

(22) Anmeldetag: **12.02.87**

(51) Int. Cl.⁵: **B 60 R 19/00,** B 62 D 25/08,
B 62 D 21/15

(54) **Trägeranordnung für den Vorderwagen eines Fahrzeugs.**

(30) Priorität: **05.03.86 DE 3607171**

(43) Veröffentlichungstag der Anmeldung:
**09.09.87 Patentblatt 87/37**

(45) Bekanntmachung des Hinweises auf die
Patenterteilung:
**22.08.90 Patentblatt 90/34**

(84) Benannte Vertragsstaaten:
**DE ES FR GB IT**

(56) Entgegenhaltungen:
**DE-A-2 827 834**
**DE-A-3 026 749**
**DE-A-3 035 352**
**US-A-4 358 152**

(73) Patentinhaber: **VOLKSWAGEN**
**AKTIENGESELLSCHAFT**
**D-3180 Wolfsburg (DE)**

(72) Erfinder: **Sinnhuber, Ruprecht, Dipl.-Ing.**
**Berliner Ring 25**
**D-3170 Gifhorn (DE)**

Courier Press, Leamington Spa, England.

**Beschreibung**

Die Erfindung bezieht sich auf eine Trägeranordnung für den Vorderwagen eines Fahrzeugs, insbesondere eines Personenkraftfahrzeugs gemäß dem Oberbegriff des Anspruches 1.

Bei Unfällen von Personenkraftfahrzeugen, bei denen ein Fahrzeug in den Seitenbereich eines zweiten Fahrzeugs hineinfährt (Seitenaufprall) können schwere Verletzungen der Fahrzeuginsassen auftreten. Die Ursache dafür liegt zum einen darin, daß die Seitenteile der Fahrzeuge aus Bauraumgründen nur relativ kurze verformbare Räume (Knatschzonen) aufweisen. Zum anderen sind in dem Vorderwagen des stoßenden Fahrzeugs im allgemeinen relativ steife Längsträger vorhanden, die bei einem solchen Seitenaufprall in die Seitenpartien des gestoßenen Fahrzeugs eindrigen. Diese Längsträger befinden sich im Bereich des Vorderwagens des Fahrzeugs im allgemeinen in einer Höhe, die oberhalb der Unterkante der Fahrzeugtüren liegt. Um nun bei einem Seitenaufprall dem Eindrigen solcher relativ aggressiven Teile des stoßenden Fahrzeugs eine größeren Widerstand entgegenzusetzen, ist bereits vorgeschlagen worden, in die Seitentüren der Fahrzeuge biegesteife Träger oder Leitplanken einzubauen, die den Türbereich versteifen. Solche Leitplanken müssen sich dann an den Endbereichen der Türen an den Türsäulen abstützen und erfordern einen relativ großen Bauaufwand.

Bei der vorliegenden Erfindung wurde von einer Trägeranordnung, wie sie in der DE—A1—3 026 749 beschrieben ist, ausgegangen. Dort ist die Trägeranordnung im Frontbereich eines stoßenden Fahrzeuges so ausgestaltet, daß bei einem Fahrzeugunfall ein Abstützglied des stoßenden Fahrzeuges mit einem seitlichen Längsträger — in diesem Falle einem Türschweller — des gestoßenen Fahrzeuges zusammenwirkt.

Die der Erfindung zugrundeliegende Aufgabe besteht nun darin, durch eine besondere Trägeranordnung in den Fahrzeugen die Grundlage dafür zu schaffen, daß ihr Frontbereich bei dem Aufprall auf den Seitenbereich eines zweiten Fahrzeugs ein weniger aggressives Verhalten zeigt und insbesondere die Gefahr des Eindringens in den Fahrgastraum des gestoßenen Fahrzeugs reduziert wird.

Die Lösung dieser Aufgabe wird durch die in dem Kennzeichen des Patentanspruchs 1 angegebenen Merkmale erreicht. Durch den von der Erfindung vorgesehen Querträger, der zweckmäßigerweise an seinen Endbereichen mit den in dem Frontbereich des Fahrzeugs vorgesehenen Längsträgern starr verbunden ist und sowohl zur Lagerung von im Frontbereich des Fahrzeugs angeordneten Aggregaten als auch zur Aufnahme des Stoßfängers sowie einer einen Frontspoiler bildenden Verkleidung vorgesehen sein kann, wird diese Unfallgeschehen bei einem Seitenaufprall wesentlich verändert. Weil dieser Querträger in Höhe der Türschweller verlaufen soll, trifft er bei einem Seitenaufprall auf einem Karosseriebereich des gestoßenen Fahrzeugs, der eine relativ große Steifigkeit aufwest. Wie Versuche gezeigt haben, kann dadurch die Höhe der bei einem Seitenaufprall auftretenden Dummybelastungen reduziert werden.

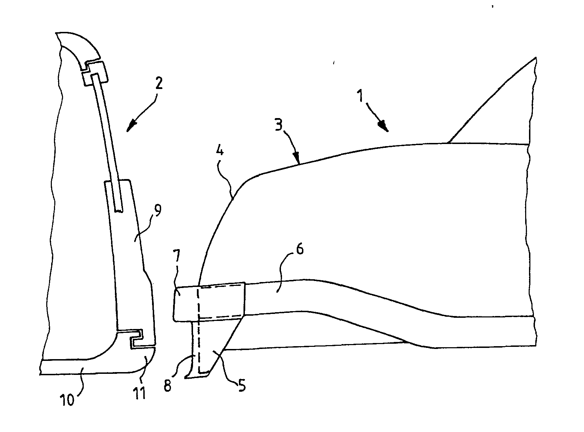

In der Zeichnung ist anhand einer schematischen Darstellung eines Seitenaufpralls zweier Personenkraftfahrzeuge die erfindungsgemäße Trägeranordnung gezeigt. Dabei bezeichnet 1 einen Teil der Kontur des stoßenden Fahrzeugs, während mit 2 die Kontur des gestoßenen Fahrzeugs angegeben ist. 3 stellt den Frontbereich des stoßenden Fahrzeugs mit einer Motorhaube 4 dar, die die in diesem Bereich angeordneten Aggregate und dgl. überdeckt. Mit 6 sind Längsträger bezeichnet die sich im wesentlichen über die gesamte Länge des Fahrzeugs erstrecken und im allgemeinen in dessen Seitenbereichen angeordnet sind. Im Frontbereich 3 weisen diese Längsträger im allgemeinen eine Höhe auf, die wesentlich oberhalb der Unterkante einer mit 9 bezeichneten Tür des gestoßenen Fahrzeugs 2 liegt.

Um nun bei dem Seitenaufprall ein Eindringen dieser Längsträger 6 in den Fahrzeuginnenraum des gestoßenen Fahrzeugs 2 nach Möglichkeit zu verringern, was selbst dann auftreten würde, wenn die Seitentüren 9 des gestoßenen Fahrzeugs eine in Höhe dieser Längsträger liegende Leitplanke aufweisen, sind die Längsträger in dem vorderen Frontbereich des Fahrzeugs über einen quer zur Längsrichtung verlaufenden biegesteifen Träger 5 verbunden, der im wesentlichen in Höhe des Türschwellerbereiches 11 des getroffenen Fahrzeugs liegt. Dieser Türschwellerbereich 11, der sozusagen den Anschluß der Bodengruppe 10 darstellt, ist relativ steif und liegt praktisch bei allen im Verkehr befindlichen Fahrzeugen in etwa in dem gleichen Höhenbereich. Die Anordnung des biegesteifen Querträgers 5 in dieser Höhe bewirkt nun, daß beim Frontalstoß eines derart ausgerüsteten Personenkraftfahrzeugs auf den Seitenbereich eines anderen Personenkraftfahrzeugs der Querträger durch den Türschweller 11 des gestoßenen Fahrzeugs aufgefangen wird, so daß ein Eindringen des Frontbereiches 3 des stoßenden Fahrzeugs in den seitlichen Türbereich des gestoßenen Fahrzeugs 2 weitgehend verhindert wird. Wir Versuche gezeigt haben, konnte damit die Belastung der in dem gestoßenen Fahrzeug sitzenden Dummies reduziert werden.

An dem Querträger 5, der bei dem Ausführungsbeispiel unterhalb der Längsträger 6 an diesen starr befestigt ist, kann im übrigen der übliche, aus der Fronthaube des Fahrzeugs herausragende Stoßfänger 7 befestigt sein, der gegebenenfalls mit dem Querträger 5 sowie einem diesen Querträger verkleidenden Frontspoiler 8 zu einer integrierten Baueinheit zusammengefaßt sein kann. Darüberhinaus kann der Querträger 5 auch zur Lagerung der im Frontbereich 3 angeordneten Antriebsaggregate und dgl. des Fahrzeugs dienen.

Die Höhe und Breite des hier im Querschnitt dreieckförmig ausgeführten Querträgers wird durch den erforderlichen Böschungswinkel, das heißt den Winkel zwischen der Fahrbahnoberfläche und einer von der Unterkante des Querträgers bzw. des Frontspoilers zur Unterseite der Fronträder verlaufenden Gerade, und durch die Befestigungsmöglichkeit an den Längsträgern 6 sowie durch die Schwellerhöhe der üblichen Personenkraftfahrzeugen und das abzustützende Moment bestimmt. Es besteht ggf. auch die Möglichkeit, bereits vorhandene und in Betrieb befindliche Fahrzeuge durch Anschrauben eines Querträgers mit entsprechender Höhe nachzurüsten.

**Patentansprüche**

1. Trägeranordnung für den Vorderwagen eines mit seitlichen Längsträgern (6) versehenen Fahrzeugs (1), insbesondere eines Personenkraftfahrzeuges, mit einem Abstützglied, das im Bereich der vorderen Enden der seitlichen Längsträger (6) angeordnet ist und mit einem Türschweller (11) eines zweiten Fahrzeugs (2) bei einem Seitenaufprall zusammenwirkt, dadurch gekennzeichnet, daß das Abstützglied ein quer zu den seitlichen Längsträgern (6) verlaufender und diese miteinander verbindender, biegungssteifer Querträger (5) ist.

2. Trägeranordnung nach Anspruch 1, dadurch gekennzeichnet, daß der Querträger (5) in seinen Endbereichen mit in den Frontbereich (3) des Fahrzeugs vorgesehenen Längsträgern (6) starr verbunden ist.

3. Trägeranordnung nach Anspruch 1 oder 2, dadurch gekennzeichnet, daß der Querträger (5) zur Lagerung von im Frontbereich (3) des Fahrzeugs angeordneten Aggregaten ausgebildet ist.

4. Trägeranordnung nach einem Ansprüch 1 bis 3, dadurch gekennzeichnet, daß an dem Querträger (5) ein aus der Fronthaube (4) des Fahrzeugs in Fahrtrichtung hervorragender Stoßfänger (7) gehalten ist.

5. Trägeranordnung nach einem der Ansprüche 1 bis 4, dadurch gekennzeichnet, daß der Querträger (5) mit einer einen Frontspoiler bildenden Verkleidung (8) versehen ist.

**Revendications**

1. Dispositif à traverse pour la partie avant d'un véhicule (1) pourvu de longerons (6), en particulier pour une automobile, comportant un élément butoir qui est placé au niveau des extrémités avant des longerons latéraux (6) et qui, lors d'une collision affectant la partie latérale d'un deuxième véhicule (2), coopère avec le longeron (11) de portière de ce véhicule, caractérisé par le fait que l'élément butoir est une traverse (5) résistant à la flexion, qui s'étend transversalement par rapport aux longerons latéraux (6) en les reliant entre eux.

2. Dispositif à traverse selon la revendication 1, caractérisé par le fait que les extrémités de la traverse (5) sont fixées rigidement aux longerons (6) disposés dans la partie avant (3) du véhicule.

3. Dispositif à traverse selon la revendication 1 ou 2, caractérisé par le fait que la traverse (5) est réalisée de façon à servir de support aux appareils logés dans la partie avant (3) du véhicule.

4. Dispositif à traverse selon une des revendications 1 à 3, caractérise par le fait que la traverse (5) porte un pare-choc (7), saillant du capot frontal (4) vers l'avant du véhicule.

5. Dispositif à traverse selon une des revendications 1 à 4, caractérisé par le fait que la traverse (5) est pourvue d'un habillage (8) constituant un spoiler avant.

**Claims**

1. A carrier arrangement for the front of a vehicle (1), in particular a passenger vehicle, provided with longitudinal carriers (6) on the side, having a support member, which is disposed in the region of the front ends of the side longitudinal carriers (6) and which interacts with a door sill (11) of a second motor vehicle (2) in the event of a side-on collision, characterised in that the support member is a transverse carrier (5) which is resistant to bending, runs transversely with respect to the side longitudinal carriers (6) and connects them to one another.

2. A carrier arrangement as claimed in claim 1, characterised in that the end regions of the transverse carrier (5) are rigidly connected to longitudinal carriers (6) in the front region (3) of the vehicle.

3. A carrier arrangement as claimed in claim 1 or 2, characterised in that the transverse carrier (5) is formed to support aggregates disposed in the front region (3) of the vehicle.

4. A carrier arrangement as claimed in any of claims 1 to 3, characterised in that a bumper (7), which projects from the front bonnet (4) of the vehicle in the direction of travel, is held on the transverse carrier (5).

5. A carrier arrangement as claimed in any of claims 1 to 4, characterised in that the transverse carrier (5) is provided with a panel (8) which forms a front spoiler.